# EUROPEAN PATENT APPLICATION

(11) **EP 3 933 668 A1**
(43) Date of publication of application: **05.01.2022**
(21) Application number: 20197807.9
(22) Date of filing: 23.09.2020
(51) Int. Cl.: G06K 9/00, G06K 9/46, H04N 5/232, G06K 9/62

(54) **POSITIONING METHOD FOR FACIAL IMAGE OF SMART MIRROR**

(30) Priority: 02.07.2020 CN 202010624876
(71) Applicant: CAL-COMP BIG DATA, INC, Shenkeng, New Taipei City 222 (TW)
(72) Inventor: WANG, Hong-Chun, 222 NEW TAIPEI CITY (TW)
(74) Representative: 2K Patentanwälte Blasberg Kewitz & Reichel

(57) **Abstract**

A positioning method for facial images implemented by a smart mirror (1) having a processor (10), a display module (11), and an image capturing module (12) is disclosed and includes following steps: displaying a default positioning mask (141) through the display module (11) after the smart mirror (1) is activated; capturing a facial image (3) of a user (2) by the image capturing module (12) when a real-time image of the user (2) is detected and aligned with the displayed default positioning mask (141); analyzing the facial image (3) for obtaining multiple facial feature points (31) from the same; creating multiple contour lines (32) based on the multiple facial feature points (31), wherein the multiple contour lines (32) at least depict facial contours and facial features of the user (2); establishing a customized positioning mask (142) exclusively belonging to the user (2) according to the multiple contour lines (32); and, storing the customized positioning mask (142) for substituting the default positioning mask (141) for the user (2).

## Description

### BACKGROUND OF THE INVENTION

### 1. Technical Field

The invention relates to a smart mirror, and specifically to a positioning method for the smart mirror to position and capture facial images.

### 2.Description of Related Art

Recently, a new type of smart mirror device has entered the market. The smart mirror device is arranged with at least a reflection mirror, a display module, and an image capturing module. The smart mirror device uses the reflection mirror to reflect the user's face so the smart mirror device can be used and regarded as a traditional mirror, and the smart mirror device uses the image capturing module to capture user's facial image. After analyzing the captured facial image, the smart mirror device can display an analyzed result and provide recommended make-up information through the display module. Therefore, the user may complete his/her make-up according to the recommendation and guidance provided from the smart mirror device, which is very convenient function.

The smart mirror device uses the image capturing module to capture the user's facial image, and analyzes the captured facial image through algorithms to obtain the user's facial information, such as skin brightness, elasticity, freckles, wrinkles, etc., so the smart mirror device can be then used to assist the user in completing his/her make-up and maintenance. The smart mirror device can capture and analyze multiple facial images of the same user at different points in time, and the smart mirror device can compare multiple analyzed results of the facial images to determine whether the user's facial condition has improved or not.

Generally speaking, the user should stand or sit in front of the smart mirror device for the image capturing module of the smart mirror device to capture the user's facial image. However, every time the user stands or sits in front of the smart mirror device, the distance and/or the angle between the user and the image capturing module can be different, which results in the smart mirror device obtaining multiple facial images in different sizes and/or different angles. In conclusion, the analyzing results performed based on these facial images with respect to the user's facial condition will be affected.

For example, although the dark spots on user's face may have been actually improved due to long-term maintenance performed by the user (for example, the dark spots are getting smaller), if the user is way too close to the image capturing module when the smart mirror device captures the user's second facial image, the smart mirror device obtains a second facial image with a size bigger than a previous facial image (such as a first facial image). As a result, the smart mirror device may determine that the dark spots on the user's face are not improved yet after comparing the two facial images due to their different sizes, leading the user to a faultly analyzed result.

### SUMMARY OF THE INVENTION

The invention is directed to a positioning method for a facial image in a smart mirror, which can create different positioning masks exclusively for different users, so as to ensure that the smart mirror can capture facial images of the same user with same or approximate distance and angle every time the user uses the smart mirror.

In one of the exemplary embodiments, the positioning method of the present invention is applied to a smart mirror with a processor, and a display module and an image capturing module electrically connected with the processor, and the positioning method at least includes the following steps of: displaying a default positioning mask through the display module after the smart mirror is activated; capturing a facial image of a user through the image capturing module when a real-time image of the user detected by the image capturing module is determined to align with the default positioning mask displayed on the display module; analyzing the facial image by the processor for retrieving multiple facial feature points from the facial image; producing multiple contour lines based on the multiple facial feature points, wherein the multiple contour lines at least depict facial contours and facial features on a face of the user included in the facial image; creating a customized positioning mask belonging to the user according to the multiple contour lines; and, storing the customized positioning mask for the user to substitute for the default positioning mask.

In comparison with related art, the present invention creates a customized positioning mask exclusively for a user based on the user's facial image, and the user can be positioned in front of the smart mirror through aligning with the customized positioning mask before the smart mirror captures the user's picture, so it is ensured that different facial images of same user captured at different time points can have same or approximate size and angle. As a result, the analyzing quality and accuracy for user's facial condition performed by the smart mirror can be effectively improved.

### BRIEF DESCRIPTION OF THE DRAWINGS

FIG. 1 is a schematic diagram of a smart mirror according to a first embodiment of the present invention.
FIG. 2 is a block diagram of the smart mirror according to a first embodiment of the present invention.
FIG. 3 is a block diagram of a processor according to a first embodiment of the present invention.
FIG. 4 is a flowchart for creating a positioning mask according to a first embodiment of the present invention.
FIG. 5A is a schematic diagram depicting a first substitution action of the present invention.
FIG. 5B is a schematic diagram depicting a second substitution action of the present invention.
FIG. 5C is a schematic diagram depicting a third substitution action of the present invention.
FIG. 5D is a schematic diagram depicting a fourth substitution action of the present invention.
FIG. 6 is a flowchart for generating the reference information according to a first embodiment of the present invention.
FIG. 7 is a schematic diagram showing the reference information according to a first embodiment of the present invention.
FIG. 8 is a positioning flowchart according to a first embodiment of the present invention.

### DETAILED DESCRIPTION OF THE INVENTION

In cooperation with the attached drawings, the technical contents and detailed descriptions of the present invention are described thereinafter according to multiple embodiments, not being used to limit its executing scope. Any equivalent variation and modification made according to appended claims is all covered by the claims claimed by the present invention.

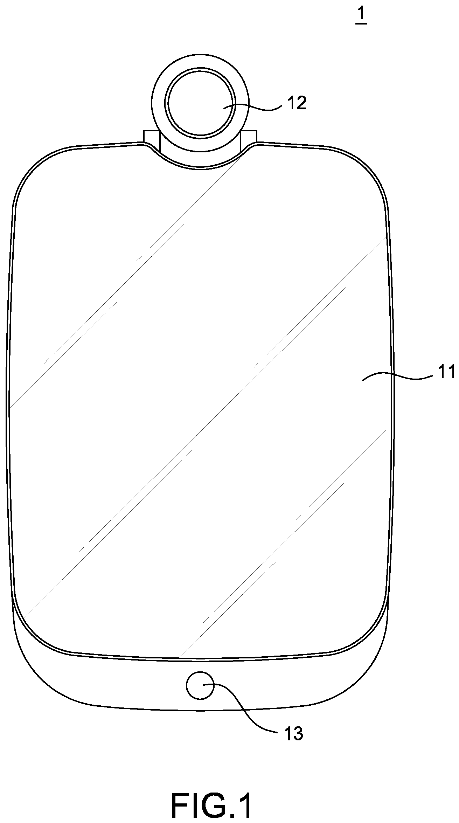

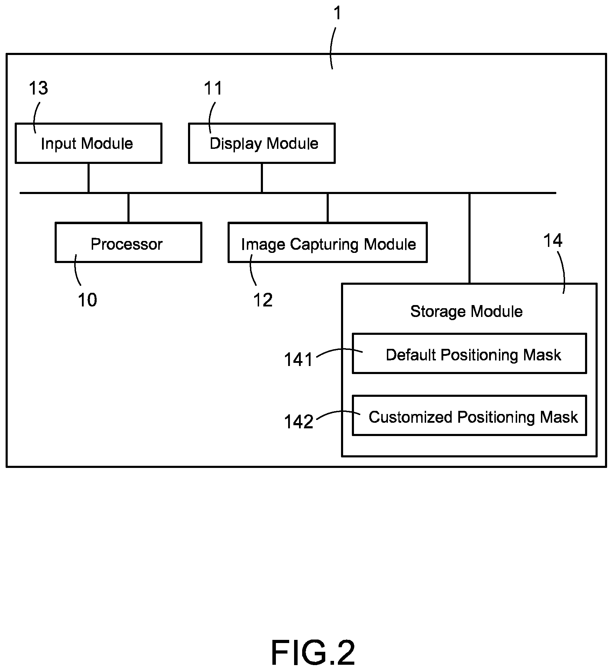

Please first refer to FIG. 1 and FIG. 2, wherein FIG. 1 is a schematic diagram of a smart mirror according to a first embodiment of the present invention, and FIG. 2 is a block diagram of the smart mirror according to a first embodiment of the present invention.

As disclosed in FIG. 1 and FIG. 2, a smart mirror 1 has been disclosed by the present invention, wherein the smart mirror 1 mainly includes a processor 10, and includes a display module 11, an image capturing module 12, and an input module 13 electrically connected with the processor 10. The smart mirror 1 has been arranged with a reflection mirror on its front face, the display module 11 is arranged behind the reflection mirror and integrated with the reflection mirror as a union.

In the present invention, the smart mirror 1 can use the reflection mirror to reflect a user's image, and can use the display module 11 to display relevant information, such as digital images captured by the image capturing module 12, image analyzing results generated by the processor 10, etc.. If the brightness of the display module 11 is greater than a default threshold, the content of the display module 11 can penetrate the reflection mirror and be displayed directly on the reflection mirror. Therefore, the user can see the displayed content of the display module 11 directly on the reflection mirror.

The smart mirror 1 receives user's operation through the input module 13. The operation can be, for example but not limited to, to instruct the smart mirror 1 to enter a facial condition analysis mode (for performing a facial condition analysis procedure). After entering the facial condition analysis mode, the smart mirror 1 can capture a user's facial image through the image capturing module 12, and then analyze the captured facial image through the processor 10 to determine the current facial condition of the user, such as skin brightness, elasticity, dark spots, wrinkles, etc.. After such procedures, the smart mirror 1 can display an alanyzed result generated by the processor 10 on the display module 11.

In one of the exemplary embodiments, the input module 13 can be a physical keyset or a touch keypad individually existing on the smart mirror 1, but is not limited thereto. In another one of the exemplary embodiments, the display module 11 can be a touch screen and the smart mirror 1 can receive external operations directly through the reflection mirror In this embodiment, the input module 13 and the display module 11 can be integrated in union (which is the touch screen).

In one of the exemplary embodiments, the image capturing module 12 can be, for example, a camera, or any image sensor that can detect, scan, capture, or obtain external images. The image capturing module 12 is arranged on the front face of the smart mirror 1, and is used to capture the images of the user (especially facial images) who is currently standing or sitting in front of the smart mirror 1.

In one of the exemplary embodiments, the processor 10 can be, for example, a central processing unit (CPU), a micro control unit (MCU), a system on a chip (SoC), etc, but is not limited thereto. The processor 10 is embedded with specific computer executable program code. After the program code is executed by the processor 10, the internal components of the smart mirror 1 can be activated and controlled by the processor 10 to work for implementing the positioning method of the present invention.

As disclosed above, the processor 10 of the smart mirror 1 can analyze the user's facial image captured by the image capturing module 12, so the factors of the facial image such as resolution of the facial image, and position, size, and angle of user's face in the facial image, will all affect the accuracy of the processor's 10 analyzing result. In order to solve the above-mentioned potential problem, the positioning method of the present invention can guide the user while using the smart mirror 1 to capture the faical image, so as to assist the smart mirror 1 to capture, through the image capturing module 12, different facial images with the same or approximate size and angle whenever the user operates the smart mirror 1. Therefore, the analyzing quality of the processor 10 of the smart mirror 1 can be guaranteed.

In particular, the technical solution of the present invention mainly includes following features: (1) capturing user's facial image when the user uses the smart mirror 1 for the first time; (2) processing the captured facial image for creating a customized positioning mask 142 which is exclusively belonging to this user; and (3) using the customized positioning mask 142 to substitute for a default positioning mask 141 commonly used and embedded in the smart mirror 1. By using the above technical solution, after using the smart mirror 1 for the first time, the customized positioning mask 142 can be created and used by the smart mirror 1 to position the same user when the user is again standing or sitting in front of the smart mirror 1, so the image capturing module 12 of the smart mirror 1 can capture another facial image of the user with the same or approximate size and angle due to the positioning procedure. In conclusion, the analyzing quality and accuracy of the processor 10 of the smart mirror 1 in the facial condition analysis mode can be effectively improved due to the same or approximate facial images.

As disclosed in FIG. 2, the smart mirror 1 further includes a storage module 14 electrically connected with the processor 10. In one of the exemplary embodiments, the default positioning mask 141 and the customized positioning mask(s) 142 are stored in the storage module 14, and the processor 10 can read the information from the storage module 14.

In one of the exemplary embodiments, the storage module 14 can be, for example, a hard disk drive (HDD), a solid-state disk (SSD), a non-volatile memory, etc., but not limited thereto. In another one of the exemplary embodiments, the storage module 14 can be a portable storage or a cloud storage, and the storage module 14 connects and communicates to the smart mirror 1 through interfaces or the Internet, but is not limited thereto.

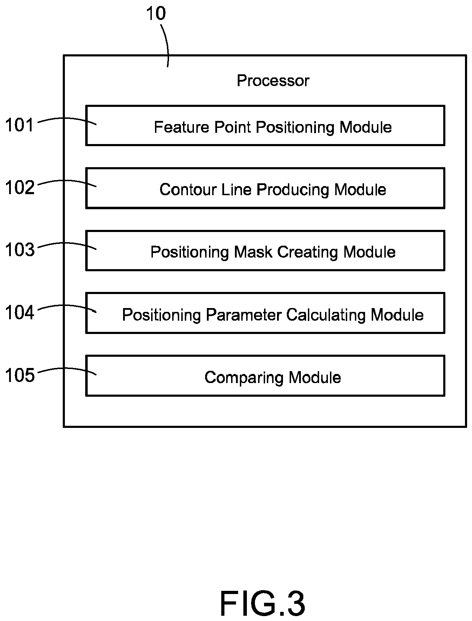

FIG. 3 is a block diagram of a processor according to a first embodiment of the present invention. As mentioned above, the processor 10 is used to perform the positioning method of the present invention through the computer executable program code. It should be mentioned that the computer executable program code can be divided and regarded as multiple digital modules according to different functions with respect to multiple steps of the positioning method. In the embodiment shown in FIG. 3, the processor 10 executes the computer executable program code for simulating a feature point positioning module 101, a contour line producing module 102, a positioning mask creating module 103, a positioning parameter calculating module 104, and a comparing module 105 according to the corresponding functions of the computer executable program code.

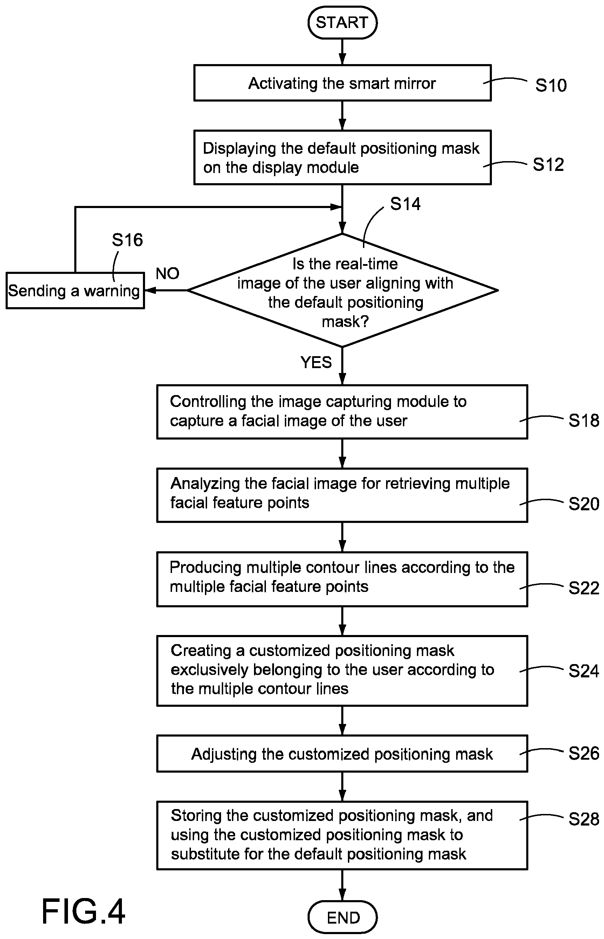

Please also refer to FIG. 4, which is a flowchart for creating a positioning mask according to a first embodiment of the present invention. When a user uses the smart mirror 1 for the first time, the user should activate the smart mirror 1 (step S10). In order to assist the user to be positioned in front of the smart mirror 1 and for the image capturing module 12 to capture a sufficient facial image of the user, the smart mirror 1 reads the default positioning mask 141 from the storage module 14, and displays the default positioning mask 141 on the display module 11 (step S12).

Next, the processor 10 continually detects the user's real-time image through the image capturing module 12 (i.e., the image capturing module 12 does not actually capture and store the detected facial image), and determines whether the current position of the real-time image is aligned with the default positioning mask 141 displayed on the display module 11 (step S14). Before the position of the real-time image is determined as aligned with the default positioning mask 141, the processor 10 controls the display module 11 to send a warning (step S16), and the processor 10 keeps detecting the real-time image of the user through the image capturing module 12 until one of the detected real-time images has been determined as aligned with the displayed default positioning mask 141.

In particular, the processor 10 in the step S16 can control the display module 11 to send the warning by way of, for example but not limited to, text, colors, pictures, sounds, vibration, etc..

If the processor 10, in step S14, determines that the real-time image of the user is aligned with the default positioning mask 141 displayed on the display module 11, the processor 10 then controls the image capturing module 12 to capture a facial image of the user (step S18).

After step S18, the processor 10 can obtain a facial image of the user from the image capturing module 12. Next, the processor 10 analyzes the facial image through the feature point positioning module 101 to retrieve multiple facial feature points from the facial image (step S20), and the processor 10 calculates the multiple facial feature points through the contour line producing module 102 to produce multiple contour lines (step S22). In the embodiment, the processor 10 uses the multiple contour lines to depict facial contours and facial features such as eyes, nose, mouth, etc. on a face of the user included in the captured facial image, but is not limited thereto.

In one of the exemplary embodiments, the feature point positioning module 101 is used to analyze the facial image through the Dlib Face Landmark System algorithm, so the multiple facial feature points can be retrievied from the face in the facial image. The contour line producing module 102 is used to calculate the multiple facial feature points through Sobel Filter, so multiple contour lines can be produced based on multiple facial feature points. However, the above descriptions are only few embodiments that may be used, and are not intended to narrow the claimed scope of the present invention to the above described embodiments.

After producing the multiple contour lines, the processor 10 further creates, through the positioning mask creating module 103, a customized positioning mask 142 which exclusively belongs to this user according to the multiple contour lines (step S24). It should be mentioned that the customized positioning mask 142 is created based on the user's facial image, according to a previous setting to the positioning mask creating module 103, and multiple facial contours and facial features like eyebrows, eyes, nose, and lips with respect to the user's face can be depicted in the customized positioning mask 142.

After the customized positioning mask 142 has been created, the processor 10 can adjust the absolute coordinates of the customized positioning mask 142 being displayed on the display module 11 according to the absolute coordinates of the default positioning mask 141, and then the processor 10 can use the customized positioning mask 142 to substitute for the default positioning mask 141. However, different users may have different face shapes and different sizes of facial features, so the customized positioning masks 142 created for different users will be different. After step S24, the user can further adjust the position, angle, and size of the customized positioning mask 142 being displayed on the display module 11 (step S26) through the input module 13, so the customized positioning mask 142 automatically created by the smart mirror 1 can be more suitable for user's actual demand.

In another one of the exemplary embodiments, the user can choose not to do any adjustment to the customized positioning mask 142 that has been automatically created by the processor 10 of the smart mirror 1.

After step S24 or step S26, the processor 10 stores the customized positioning mask 142 to the storage module 14, and the processor 10 uses the customized positioning mask 142 to substitute for the default positioning mask 141 for this user who now has his/her own customized positioning mask 142 (step S28).

After step S28, if the same user activates the smart mirror 1 for the next time, the processor 10 will display one of the customized positioning masks 142 corresponding to the identity of this user on the display module 11. In other words, the smart mirror 1 uses the customized positioning mask 142 to position the user who is again standing or sitting in front of the smart mirror 1 instead of displaying the default positioning mask 141. By doing so, the factors (such as size, angle, etc.) of every facial image captured later will be the same or approximate to that of the facial image previously captured in the step S18. As a result, when the processor 10 performs an analysis according to multiple facial images of the user, the analyzing quality and accuracy will be effectively improved due to the same/approximate factors of these facial images.

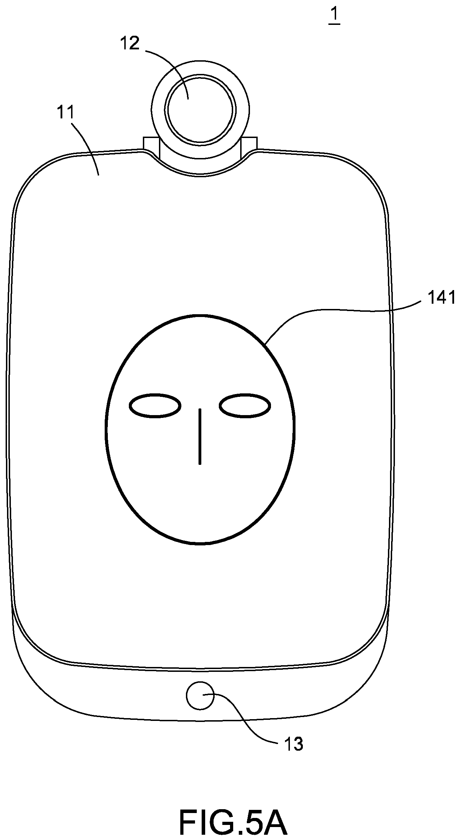

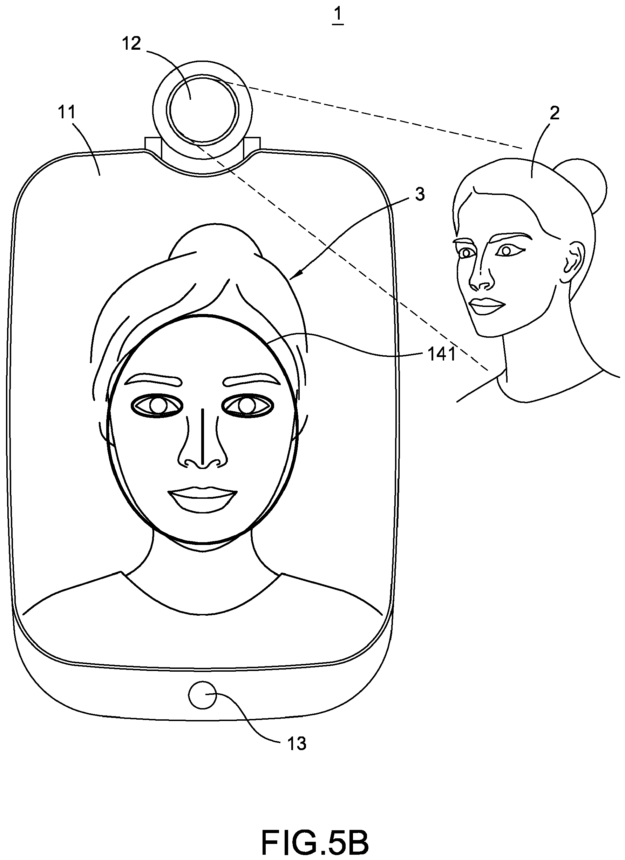

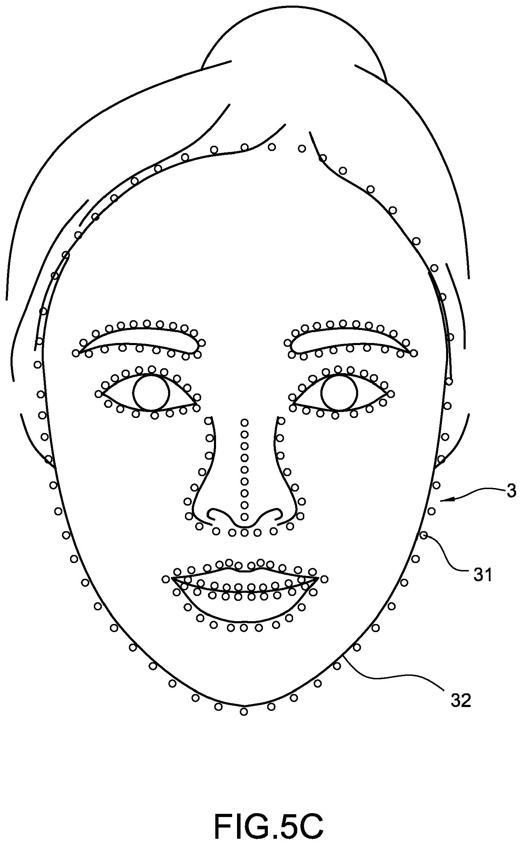

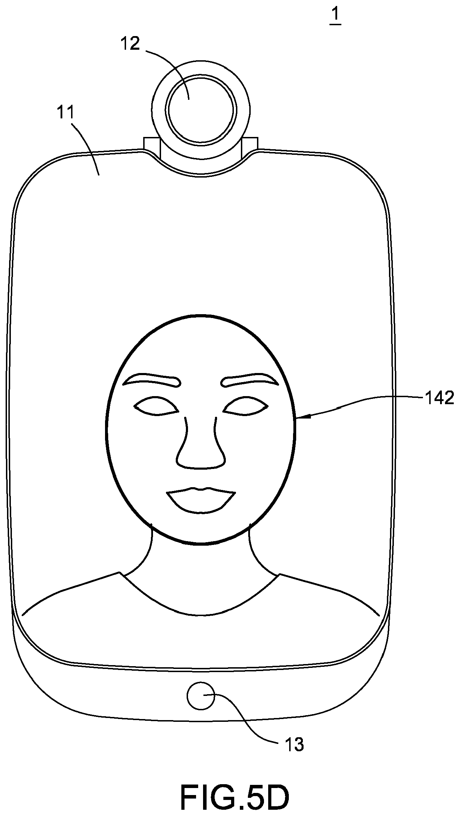

Please refer to FIG. 5A to FIG. 5D, wherein FIG. 5A is a schematic diagram depicting a first substitution action of the present invention, FIG. 5B is a schematic diagram depicting a second substitution action of the present invention, FIG. 5C is a schematic diagram depicting a third substitution action of the present invention, and FIG. 5D is a schematic diagram depicting a fourth substitution action of the present invention. In particular, FIG. 5A to FIG. 5D are illustrated to describe the step S12 to the step S28 as discussed and shown in FIG. 4 in detail.

As disclosed in FIG. 5A, when a user 2 uses the smart mirror 1 for the first time (i.e., the smart mirror 1 doesn't have any facial image of the user 2), the smart mirror 1 directly displays the default positioning mask 141 on the display module 11. As shown, the default positioning mask 141 has been designed to depict simple and common shapes which can be corresponded to multiple unspecified users. For example, the default positioning mask 141 can be designed to roughly depict only the regions with respect to eyes and a nose.

As shown in FIG. 5B, the user 2 stands or sits in front of the smart mirror 1 and locates in the field of view (FoV) of the image capturing module 12, so the image capturing module 12 is able to capture a facial image 3 of the user 2. In particular, the processor 10 controls the image capturing module 12 to continually detect and obtain real-time images of the user 2, and controls the image capturing module 12 to actually capture the facial image 3 of the user 2 when one of the detected real-time images is determined to be aligned with the default positioning mask 141 currently displayed on the display module 11.

Next, as shown in FIG. 5C, the processor 10 analyzes the facial image 3 through the feature point positioning module 101 for retrieving multiple facial feature points 31 from a face of the user 2 included in the facial image 3. In one of the exemplary embodiments, the feature point positioning module 101 may perform the Dlib Face Landmark system algorithm to the facial image 3 for retrieving 119 facial feature points from the facial image 3. Also, the processor 10 processes the multiple facial feature points 31 through the contour line producing module 102 to produce multiple contour lines 32, and the processor 10 then processes the multiple contour lines 32 through the positioning mask creating module 103 to create a customized positioning mask 142 which exclusively belongs to the user 2.

As disclosed in FIG. 5D, the processor 10 eventually stores the created customized positioning mask 142 to the storage module 14. Whenever the same user 2 activates the smart mirror 1, the processor 10 will directly display the customized positioning mask 142 belonging to this user 2 on the display module 11, instead of displaying such default positioning mask 141 commonly applied for a new user.

According to the aforementioned technical solution of the present invention, the smart mirror 1 can display a positioning mask which is closer to user's 2 real face on the display module 11, so the user 2 can be assisted to perform a more effective positioning action. Therefore, the smart mirror 1 can obtain multiple facial images 3 of same user 2 at different time points, and these facial images 3 can be ensured to have same or approximate size and angle.

If the customized positioning mask 142 exclusively belonging to the user 2 has been created and stored, the next time the user 2 stands or sits in front of the smart mirror 1, the processor 10 can determine whether the user's current position is suitable for being analyzed by comparing the customized positioning mask 142 with user's 2 real-time image(s) detected by the image capturing module 12, and the processor 10 can determine whether to perform an image capturing action for capturing the user's 2 facial image for analyzing according to the comparing result.

More specifically, when performing the comparing action, the processor 10 first analyzes the customized positioning mask 142 to generate one or more first parameters, and the processor 10 also analyzes the user's 2 real-time image to generate one or more second parameters, and then the processor 10 compares the customized positioning mask 142 with the real-time image according to the first parameters and the second parameters. In this case, the processor 10 determines a similarity between the customized positioning mask 142 and the user's real-time image by comparing the first parameters with the second parameters, and then the processor 10 can determine whether to perform the image capturing action according to the similarity.

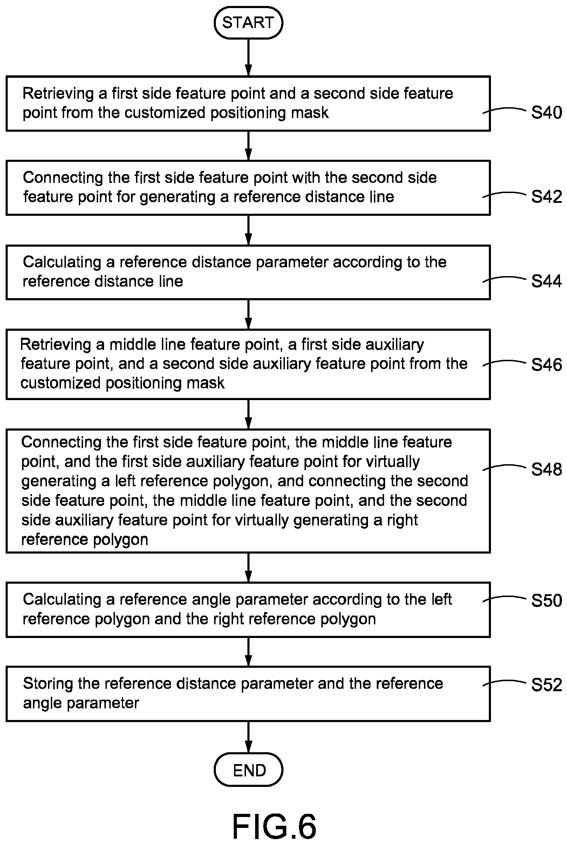

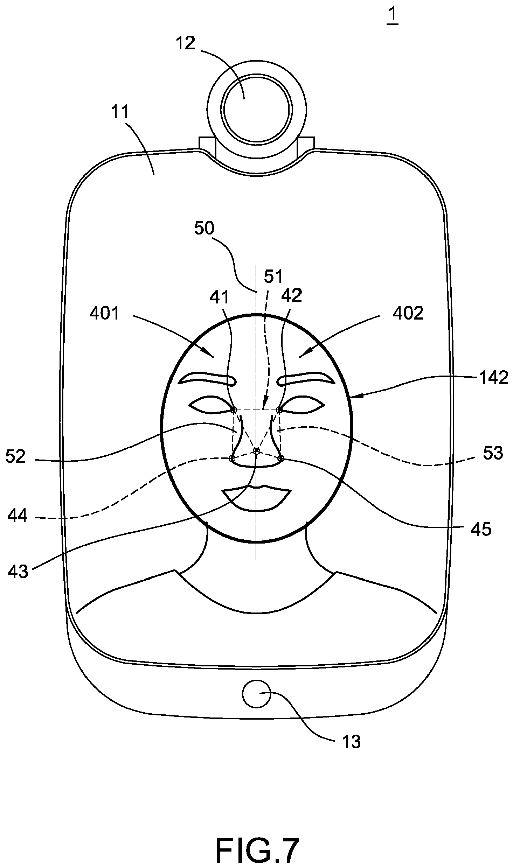

Please refer to FIG. 6 and FIG. 7 at the same time, wherein FIG. 6 is a flowchart for generating the reference information according to a first embodiment of the present invention, and FIG. 7 is a schematic diagram showing the reference information according to a first embodiment of the present invention.

As discussed above, the customized positioning mask 142 is created based on the user's 2 facial image 2, and the customized positioning mask 142 at least depicts user's 2 facial contours and facial features including but not limited to eyebrows, eyes, nose, lips, etc..

After the processor 10 obtains the customized positioning mask 142, the processor 10 analyzes the customized positioning mask 142 through the positioning parameter calculating module 104 to at least retrieve a first side feature point 41 and a second side feature point 42 from the customized positioning mask 142 (step S40). Next, the positioning parameter calculating module 104 connects the first side feature point 41 with the second side feature point 42 to virtually generate a reference distance line 51 (step S42), and calculates a reference distance parameter according to the reference distance line 51 (step S44). In one of the exemplary embodiments, the processor 10 compares the customized positioning mask 142 with the real-image of the user 2 based on the reference distance parameter of the customized positioning mask 142 to determine whether to perform the image capturing action or not.

In step S40, the processor 10 is basically generating a virtual perpendicular line 50 along a vertical direction from the bridge of the nose on the face included in the customized positioning mask 142, and virtually divides the face in the customized positioning mask 142 into a first side of face 401 and a second side of face 402 through the virtual perpendicular line 50. In one of the exemplary embodiments, the processor 10 generates a virtual perpendicular line 50 which passes through the nose tip and a central point between the left eye and the right eye on the face in the customized positioning mask 142. In another one of the exemplary embodiments, the processor 10 uses the multiple facial feature points 31 around the bridge of the nose (as shown in FIG. 5C) to generate the virtual perpendicular line 50, or uses the multiple facial feature points 31 around the nose with distance relationships among these facial feature points 31 to generate the virtual perpendicular line 50.

In particular, the first side feature point 41 can be an arbitrary feature point which is located on the first side of face 401 and hardly shifts its position following a variation of facial expressions. Similarly, the second side feature point 42 can be another arbitrary feature point which is located on the second side of face 402 and hardly shifts its position following a variation of facial expressions. In one of the exemplary embodiments, the first side of face 401 can be a left face, and the first side feature point 41 can be a feature point at the corner of the left eye or a feature point at the end of the left eye located on the left face; the second side of face 402 can be a right face, and the second side feature point 42 can be a feature point at the corner of the right eye or a feature point at the end of the right eye located on the right face, but are not limited thereto.

It should be mentioned that the reference distance parameter is an absolute value, which equals the total pixel amount between the first side feature point 41 and the second side feature point 42. In particular, the reference distance parameter at least includes a length of the reference distance line 51, and the reference distance parameter can optionally include a tilted angle of the reference distance line 51 relative to a horizontal plane, but is not limited thereto. In this case, the titled angle of the reference distance line 51 relative to the horizontal plane can be used for the processor 10 to determine if the face of the user 2 (i.e., the head of the user 2) who is standing or sitting in front of the smart mirror 1 is left-tilted or right-tilted or not.

Besides for the first side feature point 41 and the second side feature point 42, the positioning parameter calculating module 104 of the processor 10 can further analyze the customized positioning mask 142 to retrieve a middle line feature point 43, a first side auxiliary feature point 44, and a second side auxiliary feature point 45 from the face included in the customized positioning mask 142 (step S46). Next, the positioning parameter calculating module 104 connects the first side feature point 41, the middle line feature point 43, and the first side auxiliary feature point 44 for virtually generating a left reference polygon 52, and also connects the second side feature point 42, the middle line feature point 43, and the second side auxiliary feature point 45 to virtually generate a right reference polygon 53 (step S48).

In step S46, the processor 10 regards the virtual perpendicular line 50 which passes through the nose tip of the face in the customized positioning mask 142 as a middle line of the face, and regards an arbitrary feature point located on the middle line as the middle line feature point 43. The processor 10 in the step S46 regards an arbitrary feature point located inside the first side of face 401 other than the first side feature point 41 as the first side auxiliary feature point 44, and regards another arbitrary feature point located inside the second side of face 402 other than the second side feature point 42 as the second side auxiliary feature point 45. In this case, the first side auxiliary feature point 44 and the second side auxiliary feature point 45 are also feature points which hardly shift their positions following the variation of facial expressions.

In one of the exemplary embodiments, the middle line feature point 43 can be a nose tip feature point located on the nose tip, the first side auxiliary feature point 44 can be a left nose-alae feature point located on one side of the nose, and the second side auxiliary feature point 45 can be a right nose-alae feature point located on another side of the nose. In this embodiment, the processor 10 can generate the left reference polygon 52 according to the feature point at the corner of the left eye, the middle line feature point, and the left nose-alae feature point, and can generate the right reference polygon 53 according to the feature point at the corner of the right eye, the middle line feature point, and the right nose-alae feature point, wherein, the left reference polygon 52 and the right reference polygon 53 are triangles.

After step S48, the positioning parameter calculating module 104 of the processor 10 can calculate a reference angle parameter according to the left reference polygon 52 and the right reference polygon 53 (step S50). In one of the exemplary embodiments, the processor 10 compares the customized positioning mask 142 with the real-time image of the user 2 based on the reference angle parameter of the customized positioning mask 142 for determining whether or not to perform the image capturing action.

It should be mentioned that the reference angle parameter is also an absolute value, which equals the total pixel amount in a region constituted by the first side feature point 41, the middle feature point 43, and the first side auxiliary feature point 44, and/or equals the total pixel amount in another region constituted by the second side feature point 42, the middle line feature point 43, and the second side auxiliary feature point 45. In particular, the reference angle parameter at least includes an area of the left reference polygon 52, an area of the right reference polygon 53, and a ratio of the left reference polygon 52 and the right reference polygon 53, but is not limited thereto.

It should be mentioned that the aforementioned steps S40 to S44 are performed to generate the reference distance parameter based on the customized positioning mask 142, and steps S46 to S50 are used to generate the reference angle parameter based on the customized positioning mask 142, but those steps do not have a fixed execution order. In other words, the processor 10 may calculate the reference distance parameter first or calculate the reference angle parameter first, or the processor 10 can simultaneously calculate both the reference distance parameter and the reference angle parameter through multiplexing, but is not limited in the order as shown in FIG. 6. After step S44 and S50, the processor 10 may further store the calculated reference distance parameter and the calculated reference angle parameter (step S52).

It should be mentioned that the purpose for the positioning parameter calculating module 104 generating the reference distance line 51, the left reference polygon 52, and the right reference polygon 53 is to calculate the reference distance parameter and the reference angle parameter, so the processor 10 does not have to display the reference distance line 51, the left reference polygon 52, and the right reference polygon 53 on the display module 11 as shown in FIG. 7. In other words, when standing or sitting in front of the smart mirror 1 for positioning, the user 2 can directly see the customized positioning mask 142 on the display module 11, but the user 2 may not see the reference distance line 51, the left reference polygon 52, and the right reference polygon 53 being displayed on the customized positioning mask 142.

Once the processor 10 obtains the reference distance parameter and the reference angle parameter, when same user 2 uses the smart mirror 1, the processor 10 can assist the user 2 to be positioned in front of the smart mirror 1 according to the reference distance parameter and the reference angle parameter, so the image capturing module 12 can capture another facial image which is the same or approximate to a previous captured facial image of the same user 2, therefore, the analyzing quality of the aforementioned facial condition analysis procedure performed by the processor 10 will be improved.

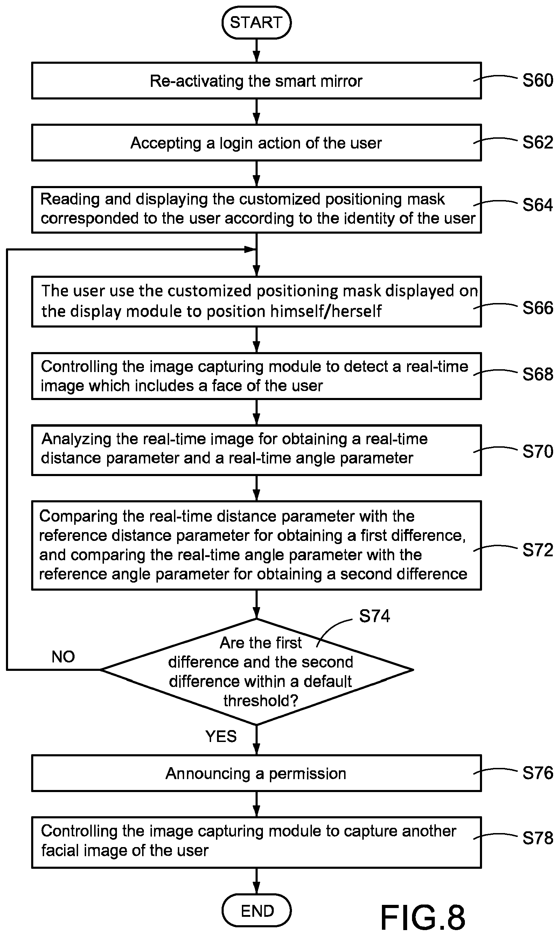

FIG. 8 is a positioning flowchart according to a first embodiment of the present invention. As shown in FIG. 8, next time when the user 2 wants to perform such facial condition analysis procedure, the user 2 has to re-activate the smart mirror 1 (step S60). After the smart mirror 1 is turned on, it then displays the previously created customized positioning mask 142 which belongs to the user 2 on the display module 11.

In particular, one smart mirror 1 can be provided to serve multiple users 2. By performing the steps disclosed with respect to FIG. 4, the processor 10 can respectively create different customized positioning masks 142 for different users 2, and stores these customized positioning masks 142 to the storage module 14. When one of the users 2 activates the smart mirror 1 for the next time, the smart mirror 1 may accept a login action of this user 2 through the input module 13 (step S62), such as receiving this user's account and password, fingerprint, facial recognition, etc., so it can identify this user's 2 identity due to the login action.

After the user 2 login, the processor 10 reads one of the customized positioning masks 142 from the storage module 14 according to the identity of the user 2, and displays the customized positioning mask 142 on the display module 11 (step S64). As a result, the technical problem in that using the default positioning mask 141 to position a user will cause the captured facial image to be unqualified for further analysis can be effectively prevented.

It should be mentioned that if the smart mirror 1 has been only used by one user 2, there may be only one customized positioning mask 142 stored in the storage module 14. In this scenario, it is unnecessary for step S62 to be executed.

After step S64, the user 2 can stand or sit in front of the smart mirror 1, and the user can use the customized positioning mask 142 displayed on the display module 11 to position himself/herself in front of the smart mirror 1 (step S66). More specifically, when the user 2 stands or sits in front of the smart mirror 1, the smart mirror 1 reflects the user's 2 image through its reflection mirror. When the image of the user 2 reflected on the reflection mirror is aligned with the customized positioning mask 142 displayed on the display module 11, the processor 10 considers that the current position of the user 2 is suitable, and the processor 10 then controls the image capturing module 12 to capture a facial image of the user 2.

More specifically, the processor 10 can control the image capturing module 12 to continually detect external images after step S64. If the user 2 is standing or sitting in front of the smart mirror 1, the image capturing module 12 can detect a real-time image at least including a face of the user 2 (step S68). In this embodiment, the position of the user 2 in the real-time image determined by the processor 10 corresponds to the position of the user's 2 image reflected on the reflection mirror. Next, the processor 10 analyzes the detected real-time image to obtain a real-time distance parameter and a real-time angle parameter from the detected real-time image (step S70).

In another one of the exemplary embodiments, the processor 10 only calculates the real-time distance parameter based on the real-time image in the step S70, and only compares the real-time distance parameter with the aforementioned reference distance parameter in the step S72 described in the following. In one of the exemplary embodiments, the processor 10 can only calculate the real-time angle parameter based on the real-time image in step S70, and only compares the real-time angle parameter with the reference angle parameter in the step S72 described in the following. For the sake of understanding, the following description will take the processor 10 to calculate both the real-time distance parameter and the real-time angle parameter as an example, but is not intended to narrow down the claimed scope of the present invention to the disclosure shown in FIG. 8.

As disclosed above with respect to FIG. 6 and FIG. 7, the reference distance parameter and the reference angle parameter are created by the processor 10 based on the customized positioning mask 142. In this embodiment, the real-time distance parameter and the real-time angle parameter are created by the processor 10 based on the real-time image of the user 2 according to same approach used by the processor 10 in creating the reference distance parameter and the reference angle parameter.

In particular, the processor 10, instep S70, performs the steps as shown in FIG. 6 to the real-time image of the user 2 through the positioning parameter calculating module 104 to generate the real-time distance parameter and the real-time angle parameter based on the real-time image. In other words, the rule(s) applied for generating the real-time distance parameter and the real-time angle parameter are same as or similar to the rule(s) applied for generating the reference distance parameter and the reference angle parameter.

Being more specific, the processor 10 analyzes the detected real-time image on the step S70 to at least retrieve a first side feature point, a second side feature point, a middle line feature point, a first side auxiliary feature point, and a second side auxiliary feature point from the real-time image. Next, the processor 10 connects the first side feature point and the second side feature point to virtually generate a real-time distance line, and then generates the real-time distance parameter based on the real-time distance line. In this embodiment, the real-time distance parameter at least includes a length of the real-time distance line, and the real-time distance parameter can optionally include a tilted angle of the real-time distance line relative to a horizontal plane.

The processor 10 further connects the first side feature point, the middle line feature point, and the first side auxiliary feature point to virtually generate a left real-time polygon, and also connects the second side feature point, the middle line feature point, and the second side auxiliary feature point to virtually generate a right real-time polygon. Then, the processor 10 generates the real-time angle parameter according to the left real-time polygon and the right real-time polygon. In this embodiment, the real-time angle parameter can include, for example but not limited to, an area of the left real-time polygon, an area of the right real-time polygon, and a ratio of the left real-time polygon and the right real-time polygon.

The real-time distance line, the left real-time polygon, the right real-time polygon, the real-time distance parameter, and the real-time angle parameter discussed in this embodiment are same as or similar to the reference distance line 51, the left reference polygon 52, the right reference polygon 53, the reference distance parameter, and the reference angle parameter as disclosed above. The detailed descriptions will be omitted here.

Like the disclosure with respect to FIG. 6 and FIG. 7, the processor 10, in the embodiment, generates a virtual perpendicular line along with a vertical direction from the bridge of the nose on the face included in the real-time image, and virtually divides the face in the real-time image into a first side of face and a second side of face through the virtual perpendicular line. In one of the exemplary embodiments, the processor 10 generates a virtual perpendicular line which passes through the nose tip and a central point between the left eye and the right eye on the face in the real-time image. In another one of the exemplary embodiments, the processor 10 uses the multiple facial feature points 31 around the bridge of the nose (as shown in FIG. 5C) on the face in the real-time image for generating the virtual perpendicular line, or uses the multiple facial feature points 31 around the nose on the face in the real-time image with distance relationships among these facial feature points 31 to generate the virtual perpendicular line.

In the embodiment, the processor 10 regards an arbitrary feature point which is located on the first side of face and hardly shifts its position following the variation of facial expressions as the first side feature point, and regards another arbitrary feature point which is located on the second side of face and hardly shifts its position following the variation of facial expressions as the second side feature point. Also, the processor 10 regards the virtual perpendicular line which passes through the nose tip of the face in the real-time image as a middle line of the face, and regards an arbitrary feature point located on the middle line as the middle line feature point. Further, the processor 10 regards an arbitrary feature point located on the first side of face other than the first side feature point as the first side auxiliary feature point, and regards another arbitrary feature point located on the second side of face other than the second side feature point as the second side auxiliary feature point.

In this embodiment, the first side feature point retrieved from the real-time image can be, for example, a feature point at the corner of the left eye or a feature point at the end of the left eye; the second side feature point retrieved from the real-time image can be, for example, a feature point at the corner of the right eye or a feature point at the end of the right eye; the middle line feature point retrieved from the real-time image can be, for example, a nose tip feature point located on the nose tip of the face in the real-time image; the first side auxiliary feature point retrieved from the real-time image can be, for example, a left nose-alae feature point located on the left nose-alae of the face in the real-time image; the second side auxiliary feature point retrieved from the real-time image can be, for example, a right nose-alae feature point located on the right nose-alae of the face in the real-time image. The left real-time polygon and the right real-time polygon can be triangles. However, the above descriptions are only a few embodiments of the present invention, and are not intended to narrow down the claimed scope of the present invention.

After step S70, the processor 10 compares the real-time distance parameter with the reference distance parameter, and compares the real-time angle parameter with the reference angle parameter (step S72). In particular, the processor 10 in the step S72 calculates a similarity of the real-time distance parameter and the reference distance parameter through the comparing module 105, and calculates a similarity of the real-time angle parameter and the reference angle parameter through the comparing module 105. Therefore, the processor 10 can obtain the similarity of the real-time image of the user 2 currently detected and the customized positioning mask 142 corresponding to the user 2 currently displayed on the display module 11.

It should be mentioned that the similarity discussed here indicates the similarity of the real-time image and the customized positioning mask 142 with respect to their data such as position, shape, size, tilted angle, etc., but not the similarity of their visual outlook.

Based on the real-time distance line from the real-time image and the reference distance line 51 from the customized positioning mask 142, the processor 10 can determine the current distance and horizontal tilting angle between the user 2 and the smart mirror 1. For example, if the real-time distance line is long, it means that the user 2 is close to the smart mirror 1 (i.e., close to the image capturing module 12). If the real-time distance line is longer than the reference distance line 51, it means that the current distance between the user 2 and the smart mirror 1 is shorter than a previous distance between the user 2 and the smart mirror 1 when capturing the facial image of the user 2 used to create the customized positioning mask 142.

By comparing the left real-time polygon and the right real-time polygon from the real-time image with the left reference polygon 52 and the right reference polygon 53 from the customized positioning mask 142, the processor 10 can further determine the leftward tilting, the rightward tilting, the upward tilting, and the downward tilting of the user 2 at the current position relative to the smart mirror 1. For example, if the area of the left real-time polygon is larger than the area of the left reference polygon 52, and the area of the right real-time polygon is smaller than the area of the right reference polygon 53, it means that the current position of the user 2 is more rightward tilted relative to the smart mirror 1 in comparison with a previous position of the user 2 when capturing the facial image of the user 2 used for creating the customized positioning mask 142.

In another embodiment, if a connection line between the first side feature point and the middle line feature point of the real-time image is longer than another connection line between the first side feature point and the middle line feature point of the customized positioning mask 142, it indicates that the head of the user 2 is currently downward tilted. Similarly, if a connection line between the first side feature point and the middle line feature point of the real-time image is shorter than another connection line between the first side feature point and the middle line feature point of the customized positioning mask 142, it indicates that the head of the user 2 is currently upward tilted.

However, the above descriptions are only a few embodiments of the present invention, and are not intended to narrow down the claimed scope of the present invention.

By doing the comparison with respect to step S72, the processor 10 can obtain a first difference between the real-time distance parameter and the reference distance parameter, and can also obtain a second difference between the real-time angle parameter and the reference angle parameter. Therefore, the processor 10 further determines whether the first difference and the second difference are within a default threshold (step S74).

If the first difference is larger than the threshold, it indicates that the current position of the user 2 is too close to or too far from the smart mirror 1. If the second difference is larger than the threshold, it indicates that the tilted angle of the user 2 relative to the smart mirror 1 exceeds a tolerance. In this scenario, the image capturing module 12 will be incapable of capturing another facial image which is the same as or approximate to the previous facial image used for creating the customized positioning mask 142. In this embodiment, the processor 10 repeats the steps S66 to S72 to continually detect the real-time image of the user 2 if any of the first difference and the second difference is determined not within the threshold, and keeps comparing the detected real-time image and the customized positioning mask 142.

In another one of the exemplary embodiments, the processor 10 can first inform the user 2 to perform an adjustment (such as adjusting his/her current position) according to the content of the first difference or the second difference when the first difference or the second difference is determined not within the threshold, and then repeats steps S66 to S72.

If determining that both the first difference and the second difference are within the threshold, the processor 10 announces a permission through the display module 11 (step S76), and controls the image capturing module 12 to capture another facial image of the user 2 (step S78).

In one of the exemplary embodiments, the processor 10 changes the color of the customized positioning mask 142 being displayed on the display module 11 to indicate the permission. In another one of the exemplary embodiments, the processor 10 displays additional text or pictures on the display module 11 to indicate the permission. In further one of the exemplary embodiments, the processor 10 controls a buzzer or a speaker (not shown) to announce the permission through different type of sounds.

By using the above-discussed procedure, the processor 10 of the smart mirror 1 can ensure that the facial image captured in the step S78 has same or approximate factor (such as size, angle, etc.) in comparison with the facial image captured in the step S18. As a result, when the processor 10 analyzes and compares these two facial images through other algorithms (not shown in the FIGs), the processor 10 can obtain a more accurate analyzed result, so as to improve the analyzing quality and accuracy of the smart mirror 1 in performing a facial condition analysis procedure.

## Claims

1. A positioning method for a facial image of smart mirror applied to a smart mirror (1) having a processor (10), a display module (11), and an image capturing module (12) electrically connected with the processor (10), and the positioning method comprising:
a) displaying a default positioning mask (141) through the display module (11) after the smart mirror (1) is activated;
b) capturing a facial image (3) of a user (2) through the image capturing module (12) when a real-time image of the user (2) detected by the image capturing module (12) is determined to be aligned with the default positioning mask (141) displayed on the display module (11);
c) analyzing the facial image (3) by the processor (10) for retrieving multiple facial feature points from the facial image (3);
d) producing multiple contour lines (32) based on the multiple facial feature points (31), wherein the multiple contour lines (32) at least depict facial contours and facial features on a face of the user (2) included in the facial image (3);
e) creating a customized positioning mask (142) belonging to the user (2) according to the multiple contour lines (32); and
f) storing the customized positioning mask (142) for the user (2) to substitute for the default positioning mask (141).

2. The positioning method as claimed in claim 1, wherein the step c) is to analyze the facial image (3) for retrieving the multiple facial feature points (31) through a Dlib Face Landmark system algorithm.

3. The positioning method as claimed in claim 1, wherein the step d) is to process the multiple facial feature points (31) through a sobel filter for producing the multiple contour lines (32).

4. The positioning method as claimed in claim 1, further comprising following steps after the step f):
g) displaying the customized positioning mask (142) through the display module (11) when the smart mirror (1) is re-activated;
h) detecting the real-time image of the user (2) through the image capturing module (12);
i) analyzing the real-time image for obtaining a real-time distance parameter;
j) comparing the real-time distance parameter with a reference distance parameter, wherein the reference distance parameter is generated based on the customized positioning mask (142), and the real-time distance parameter is generated based on the real-time image according to an approach same as another approach applied for generating the reference distance parameter;
k) determining whether a difference between the real-time distance parameter and the reference distance parameter is within a threshold;
l) re-executing the step h) to the step k) if the difference between the real-time distance parameter and the reference distance parameter is determined to be not within the threshold; and
m) capturing another facial image (3) of the user (2) through the image capturing module (12) if the difference between the real-time distance parameter and the reference distance parameter is determined within the threshold.

5. The positioning method as claimed in claim 4, wherein the smart mirror (1) further comprises a storage module (14) electrically connected with the processor (10), the storage module (14) is configured to store the default positioning mask (141) and multiple customized positioning masks (142), wherein the multiple customized positioning masks (142) respectively correspond to different users (2), and the step g) comprises following steps:
g1) accepting a login action from the user (2) after the smart mirror (1) is re-activated;
g2) recognizing an identity of the user (2) based on the login action; and
g3) reading a corresponding one of the customized positioning masks (142) from the storage module (14) according to the identity of the user (2), and displaying the read customized positioning mask (142) through the display module (11).

6. The positioning method as claimed in claim 4, further comprising following steps after step f):
f11) retrieving a first side feature point (41) and a second side feature point (42) from the customized positioning mask (142), wherein the processor (10) generates a virtual perpendicular line (50) along with a vertical direction from a bridge of a nose on a face of the user (2) included in the customized positioning mask (142), and virtually divides the face in the customized positioning mask (142) into a first side of face (401) and a second side of face (402);
f12) generating a reference distance line (51) by connecting the first side feature point (41) with the second side feature point (42); and
f13) calculating the reference distance parameter based on the reference distance line (51).

7. The positioning method as claimed in claim 4, wherein step i) comprises following steps:
i11) analyzing the real-time image by the processor (10) for retrieving a first-side feature point and a second-side feature point from the real-time image, wherein the processor (10) generates a virtual perpendicular-line along with a vertical direction from a bridge of a nose on a face included in the real-time image, and virtually divides the face in the real-time image into a first-side of face and a second-side of face;
i12) generating a real-time distance line by connecting the first-side feature point with the second-side feature point on the face in the real-time image; and
i13) calculating the real-time distance parameter based on the real-time distance line.

8. The positioning method as claimed in claim 6, wherein the real-time distance parameter at least comprises a length of a real-time distance line, and optionally comprises a tilted angle of the real-time distance line relative to a horizontal plane.

9. The positioning method as claimed in claim 1, further comprising following steps after step f):
n) displaying the customized positioning mask (142) through the display module (11) when the smart mirror (1) is re-activated;
o) detecting the real-time image of the user (2) through the image capturing module (12);
p) analyzing the real-time image for obtaining a real-time distance parameter and a real-time angle parameter;
q) comparing the real-time distance parameter with a reference distance parameter, and comparing the real-time angle parameter with a reference angle parameter, wherein the reference distance parameter and the reference angle parameter are generated based on the customized positioning mask (142), and the real-time distance parameter and the real-time angle parameter are generated based on the real-time image according to an approach same as another approach applied for generating the reference distance parameter;
r) determining whether a first difference between the real-time distance parameter and the reference distance parameter and a second difference between the real-time angle parameter and the reference angle parameter are within a threshold;
s) re-executing step o) to step r) if the first difference or the second difference is determined not within the threshold; and
t) capturing another facial image (3) of the user (2) through the image capturing module (12) if the first difference and the second difference are determined within the threshold.

10. The positioning method as claimed in claim 9, further comprising following steps after the step f):
f21) retrieving a first side feature point (41) and a second side feature point (42) from the customized positioning mask (142), wherein the processor (10) generates a virtual perpendicular line (50) along with a vertical direction from a bridge of a nose on a face included in the customized positioning mask (142), and virtually divides the face in the customized positioning mask (142) into a first side of face (401) and a second side of face (402);
f22) generating a reference distance line (52) by connecting the first side feature point (41) with the second side feature point (42) on the face in the customized positioning mask (142); and
f23) calculating the reference distance parameter based on the reference distance line (51).

11. The positioning method as claimed in claim 10, further comprising following steps after step f):
f24) retrieving a middle line feature point (43), a first side auxiliary feature point (44), and a second side auxiliary feature point (45) from the customized positioning mask (142), wherein the processor (10) regards the virtual perpendicular line (50) passing through a nose tip of the face in the customized feature point as a middle line of the face, regards an arbitrary feature point located on the middle line as the middle line feature point (43), regards an arbitrary feature point located inside the first side of face (401) except the first side feature point (41) as the first side auxiliary feature point (44), and regards another arbitrary feature point located inside the second side of face (402) except the second side feature point (42) as the second side auxiliary feature point (45);
f25) generating a left reference polygon (52) through connecting the first side feature point (41), the middle line feature point (43), and the first side auxiliary feature point (44), and generating a right reference polygon (53) through connecting the second side feature point (42), the middle line feature point (43), and the second side auxiliary feature point (45); and
f26) calculating the reference angle parameter according to the left reference polygon (52) and the right reference polygon (53).

12. The positioning method as claimed in claim 9, wherein step p) comprises following steps:
p1) analyzing the real-time image by the processor (10) for at least retrieving a first-side feature point, a second-side feature point, a middle-line feature point, a first-side auxiliary feature point, and a second-side auxiliary feature point from the real-time image, wherein the processor (10) generates a virtual-perpendicular line along with a vertical direction from a bridge of a nose on a face included in the real-time image, and virtually divides the face in the real-time image into a first-side of face and a second-side of face, and the processor (10) regards the virtual-perpendicular line passing through a nose tip of the face in the real-time image as a middle-line of the face, and regards an arbitrary feature point on the middle-line of the face as the middle-line feature point, wherein the first-side auxiliary feature point is different from the first-side feature point of the real-time image, and the second-side auxiliary feature point is different from the second-side feature point of the real-time image;
p2) generating a real-time distance line through connecting the first-side feature point and the second-side feature point on the face in the real-time image;
p3) calculating the real-time distance parameter according to the real-time distance line;
p4) generating a left real-time polygon through connecting the first-side feature point, the middle-line feature point, and the first-side auxiliary feature point on the face in the real-time image, and generating a right real-time polygon through connecting the second-side feature point, the middle-line feature point, and the second-side auxiliary feature point on the face in the real-time image; and
p5) calculating the real-time angle parameter according to the left real-time polygon and the right real-time polygon.

13. The positioning method as claimed in claim 12, wherein the real-time distance parameter at least comprises a length of a real-time distance line, and optionally comprises a tilted angle of the real-time distance line relative to a horizontal plane, and the real-time angle parameter comprises an area of the left real-time polygon, an area of the right real-time polygon, and a ratio of the left real-time polygon and the right real-time polygon.

14. The positioning method as claimed in claim 9, wherein step t) is to announce a permission and to capture another facial image (3) of the user (2) if both the first difference and the second difference are within the threshold.

15. The positioning method as claimed in claim 14, wherein in step t), the processor (10) announces the permission by changing a color of the customized positioning mask (142) being displayed on the display module (11).
